(19)

Europäisches
Patentamt

European
Patent Office

Office européen
des brevets

(11) **EP 3 457 650 A1**

(12) **EUROPEAN PATENT APPLICATION**
published in accordance with Art. 153(4) EPC

(43) Date of publication:
**20.03.2019 Bulletin 2019/12**

(21) Application number: **16901328.1**

(22) Date of filing: **13.05.2016**

(51) Int Cl.:
**H04L 27/26** (2006.01)

(86) International application number:
**PCT/CN2016/082031**

(87) International publication number:
**WO 2017/193373 (16.11.2017 Gazette 2017/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Fujitsu Limited
Kawasaki-shi, Kanagawa 211-8588 (JP)**

(72) Inventors:
- **ZHANG, Jian
  Beijing 100025 (CN)**
- **WANG, Xin
  Beijing 100025 (CN)**

(74) Representative: **Haseltine Lake LLP
Lincoln House, 5th Floor
300 High Holborn
London WC1V 7JH (GB)**

(54) **RESOURCE MAPPING METHOD AND DEVICE, AND COMMUNICATION SYSTEM**

(57) A resource mapping method and apparatus and a communication system. The resource mapping method includes: mapping a plurality of to-be-mapped symbols successively one resource block by one resource block onto a plurality of resource elements; wherein, a plurality of symbols belonging to the same user vector are dispersedly mapped onto resource elements of different resource blocks. Hence, diversity gains may further be obtained, and overhead of reference signals may be lowered.

301

a plurality of to-be-mapped symbols are mapped successively one RB by one RB onto a plurality of resource elements; wherein, a plurality of symbols belonging to the same user vector are dispersedly mapped onto resource elements of different RBs

**Fig. 3**

EP 3 457 650 A1

**Description**

Technical Field

This disclosure relates to the field of communication technologies, and in particular to a resource mapping method and apparatus and a communication system.

Background

Machine type communication (MTC) is a prominent feature of a fifth generation (5G) mobile communication system. In addition to the traditional man-used user equipments (such as smart phones), more and more intelligent equipments will become user equipments and are flexible to access the system. In order to achieve the Internet of Everything, 5G systems need to support more user equipment connections than 4G systems do. Therefore, new multiple access techniques are particularly important in the design of 5G systems.

Sparse Code Multiple Access (SCMA) is a new type of multiple access technique. "Sparse" means that a signal transmitted by a certain user equipment does not occupy all allocated resources, but by allowing multiple user equipments to use the same resources, more user equipments may be allowed to access the system at the same time, and SCMA is essentially a non-orthogonal multiple access mode.

Furthermore, with development of techniques, other new multiple access techniques have also been proposed, such as multi-user shared access (MUSA), pattern division multiple access (PDMA), and resource spread multiple access (RSMA), etc.

According to whether a user signal occupies all resources, the multiple access may be divided into two types, non-sparse type and sparse type. The non-sparse type extends the user signal to all resources, and the sparse type only extends the user signal to some resources, and other resources are not used. Sparse type multiple access techniques include low density signature (LDS) code division multiple access (CDMA), SCMA ,and PDMA, etc.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

However, it was found by the inventors that for the sparse type multiple access, symbols (including zero symbols and non-zero symbols) belonging to the same user vector (such as corresponding to the same codeword) in the existing schemes will be mapped onto consecutive resource elements (RE), and diversity gains cannot be fully utilized; and a demodulation reference signal (DM-RS) needs to be inserted into each resource block (RB), thereby increasing overhead of reference signals.

Embodiments of this disclosure provide a resource mapping method and apparatus and a communication system, in which a plurality of to-be-mapped symbols are mapped successively one resource block by one resource block onto a plurality of resource elements; a plurality of symbols belonging to the same user vector are dispersedly mapped onto resource elements of different resource blocks. Hence, diversity gains may further be obtained, and overhead of reference signals may be lowered.

According to a first aspect of the embodiments of this disclosure, there is provided a resource mapping method, including:

mapping a plurality of to-be-mapped symbols successively one resource block by one resource block onto a plurality of resource elements; wherein, a plurality of symbols belonging to the same user vector are dispersedly mapped onto resource elements of different resource blocks.

According to a second aspect of the embodiments of this disclosure, there is provided a resource mapping apparatus, including:

a mapping unit configured to map a plurality of to-be-mapped symbols successively one resource block by one resource block onto a plurality of resource elements; wherein, a plurality of symbols belonging to the same user vector are dispersedly mapped onto resource elements of different resource blocks.

According to a third aspect of the embodiments of this disclosure, there is provided a communication system, including:

a transmitting device configured with the above-described resource mapping apparatus; and
a receiving device configured to receive and demodulate information transmitted by the transmitting device.

An advantage of the embodiments of this disclosure exists in that a plurality of to-be-mapped symbols are mapped successively one resource block by one resource block onto a plurality of resource elements; wherein, a plurality of symbols belonging to the same user vector are dispersedly mapped onto resource elements of different resource blocks. Hence, diversity gains may further be obtained, and overhead of reference signals may be lowered.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of performing multiplexing by multiple user equipments;
FIG. 2 is a schematic diagram of commonly-used performing resource mapping;
FIG. 3 is a flowchart of the resource mapping method of Embodiment 1 of this disclosure;
FIG. 4 is a schematic diagram of an example of performing resource mapping of Embodiment 1 of this disclosure;
FIG. 5 is a schematic diagram of another example of performing resource mapping of Embodiment 1 of this disclosure;
FIG. 6 is another flowchart of the resource mapping method of Embodiment 1 of this disclosure;
FIG. 7 is a schematic diagram of a further example of performing resource mapping of Embodiment 1 of this disclosure;
FIG. 8 is a schematic diagram of comparison of the method for mapping resources one resource block by one resource block with another mapping method;
FIG. 9 is a schematic diagram of the resource mapping apparatus of Embodiment 2 of this disclosure;
FIG. 10 is a schematic diagram of the communication system of Embodiment 3 of this disclosure;
FIG. 11 is a schematic diagram of the user equipment of Embodiment 3 of this disclosure; and
FIG. 12 is a schematic diagram of the base station of Embodiment 3 of this disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In this disclosure, a base station may be referred to as an access point, a broadcast transmitter, a node B, or an evolved node B (eNB), etc., and may include some or all functions of them. A term "base station" shall be used in the text, and each base station provides communication coverage for a specific geographical region. And a term "cell" may refer to a base station and/or its coverage area, which is dependent on a context of the term.

In this disclosure, a mobile station or equipment may be referred to as a user equipment (UE). The UE may be fixed or mobile, and may also be referred to as a mobile station, a terminal, an access terminal, a user unit, or a station, etc. The UE may be a cellular phone, a personal digital assistant (PDA), a wireless modem, a wireless communication device, a handhold device, a lap-top computer, and a cordless telephone, etc.

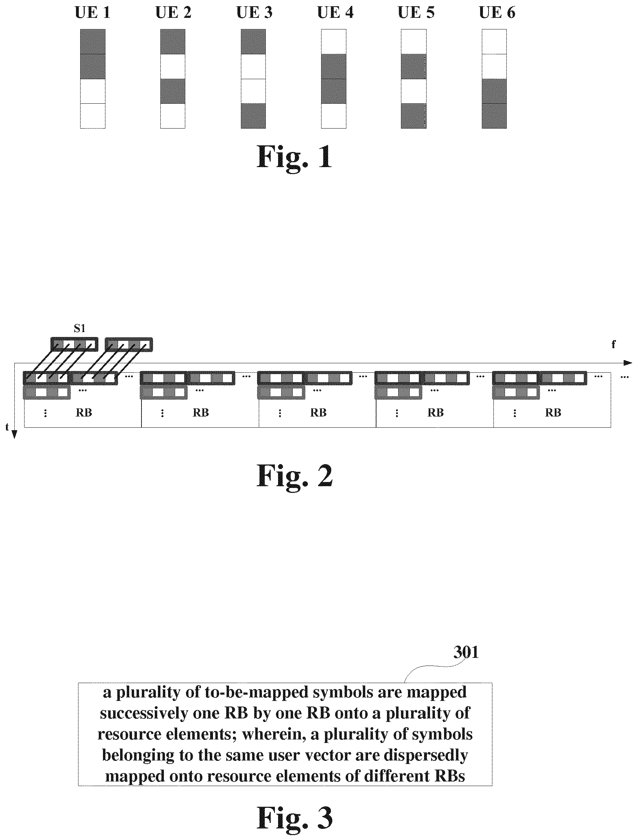

FIG. 1 is a schematic diagram of performing multiplexing by multiple user equipments. In which, each grid represents a time-frequency resource element, such as a resource element (RE) in an orthogonal frequency division multiplexing (OFDM) system.

As shown in FIG. 1, the blanks indicate zero positions, showing that the user equipment does not transmit a signal on the resource element, or it may be called transmitting zero symbols; the shadows represent non-zero positions, showing that the user equipment transmits a signal on the resource, and what are transmitted are non-zero symbols. As shown in FIG. 1, four resource elements totally carry signals of six user equipments, and each user equipment transmits two non-zero symbols.

FIG. 2 is a schematic diagram of commonly-used performing resource mapping. As shown in FIG. 2, in performing resource mapping, symbol vectors belonging to a certain user equipment (hereinafter referred to as user vectors or signature vectors, such as S1 shown in FIG. 2) are sequentially mapped onto adjacent resource elements (as shown in FIG. 2, the four symbols of S1 are mapped into the same resource block), which is usually performed in an order of the frequency domain first and then the time domain, which is in consistence with the Long Term Evolution (LTE) standard.

For the method shown in FIG. 2, one of the disadvantages is that all physical resource blocks (PRBs) are dispersed with user equipment data (i.e. non-zero symbols), so it is needed to insert a demodulation reference signal into each physical resource block. Considering massive access in the future, each physical resource block will accommodate a larger number of user equipments, and therefore, there is a need to introduce larger overhead of demodulation reference signals.

In the embodiments of this disclosure, taking use of a sparse feature of a user vector into account, symbols of the user vector are mapped successively one resource block by one resource block onto resource elements. Hence, not only diversity gains may further be obtained, but also overhead of reference signals may be lowered. The embodiments of this disclosure shall be described below in detail.

Embodiment 1

These embodiments of this disclosure provide a resource mapping method, which may be applicable to a transmitting device.

FIG. 3 is a flowchart of the resource mapping method of the embodiment of this disclosure. As shown in FIG. 3, the resource mapping method includes:

Block 301: a plurality of to-be-mapped symbols are mapped successively one resource block by one resource block onto a plurality of resource elements; wherein, a plurality of symbols belonging to the same user vector (such as corresponding to a codeword) are dispersedly mapped onto resource elements of different resource blocks.

In an embodiment, a plurality of transmitting devices may perform non-orthogonal multiple access (such as non-orthogonal multiple access based on a sparse feature). One of the transmitting devices may be, for example, an MTC UE, and the MTC UE and other user equipments perform non-orthogonal transmission to a receiving device, such as non-orthogonal transmission based on the sparse feature. However, this disclosure is not limited thereto, and following description shall be given by taking only an MTC UE and non-orthogonal multiple access based on a sparse feature as examples.

In an embodiment, the receiving device may be a macro base station (such as an eNB), and the user equipment may be served by a macro cell generated by the macro base station. Or, the receiving device may also be a micro base station, and the user equipment may be served by a micro cell (such as a pico cell) generated by the micro base station. Or, the receiving device may also be another network device. However, this disclosure is not limited thereto, and a particular scenario may be determined according to an actual situation.

In an embodiment, due to the sparse feature of the user vector, for a certain user equipment, there will be no valid data (i.e. only zero symbols exist) in some resource blocks (such as physical resource blocks). Hence, demodulation reference signals are not needed in these blank physical resource blocks, thereby lowering overhead of reference signals.

This disclosure shall be described below from a point of view of a user equipment by taking transmitting four symbols as an example.

In an embodiment, mapping multiple to-be-mapped symbols successively one resource block by one resource block onto multiple resource elements may particularly include: mapping the multiple to-be-mapped symbols successively onto the multiple resource elements in an order of "first resource blocks, then frequency domain, next time domain", that is, first, a resource block index increases, then a frequency-domain subcarrier index increases, and next a time-domain symbol (such as an OFDM symbol) index increases.

In an embodiment, the symbols belonging to the same user vector are dispersedly mapped onto resource elements of identical or neighboring time-frequency positions of different resource blocks. That is, "a neighboring mapping" manner may be adopted in this embodiment, and for a certain to-be-mapped symbol, it is mapped onto a resource element neighboring a resource element onto which a symbol has been mapped.

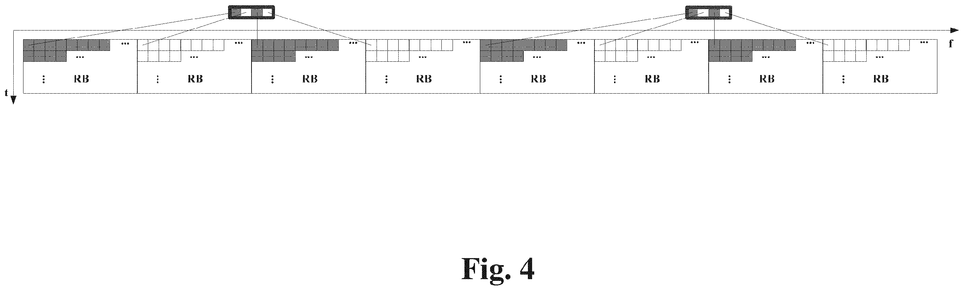

FIG. 4 is a schematic diagram of an example of performing resource mapping of the embodiment of this disclosure. As shown in FIG. 4, in mapping resources, for a certain OFDM symbol j, it is successively mapped onto physical resource blocks (such as physical resource blocks from 1 to *N, N* being the number of the physical resource blocks) starting from a subcarrier k, in an ascending direction of frequencies in an order of frequency domain first and then time domain; and after it is mapped in the frequency direction onto a physical resource block of a highest index (i.e. the *N-th* physical resource block), the above mapping is performed again (mapping one resource block by one resource block) at a position of a subcarrier *k+1* of the OFDM symbol j.

After mapping of all physical resource elements within the OFDM symbol j is finished, the above operations are repeated from an OFDM symbol *j+1*, until all symbols are mapped onto all allocated physical resource blocks. In addition to lowering overhead of reference signals, another potential advantage of mapping one resource block by one resource block lies in further obtaining diversity gains.

For example, as shown in FIG. 4, a first symbol is mapped onto a first RE of a first RB (a first OFDM symbol and a first subcarrier), a second symbol is mapped onto a first RE of a second RB (a first OFDM symbol and a first subcarrier), a third symbol is mapped onto a first RE of a third RB (a first OFDM symbol and a first subcarrier), and a fourth symbol is mapped onto a first RE of a fourth RB (a first OFDM symbol and a first subcarrier).

Therefore, not only the four symbols are dispersed on different resource blocks, so that diversity gains may be increased, but also both the second RB and the fourth RB contain only zero symbols after the resource mapping method is used, and hence, no demodulation reference signal is needed, so that overhead of reference signal may be lowered.

In another embodiment, the symbols belonging to the same user vector are dispersedly mapped onto resource elements of non-neighboring time-frequency positions of different resource blocks. That is, "a hop mapping manner" may be adopted in this embodiment, and for a certain to-be-mapped symbol, it is mapped onto a resource element non-neighboring a resource element onto which a symbol has been mapped.

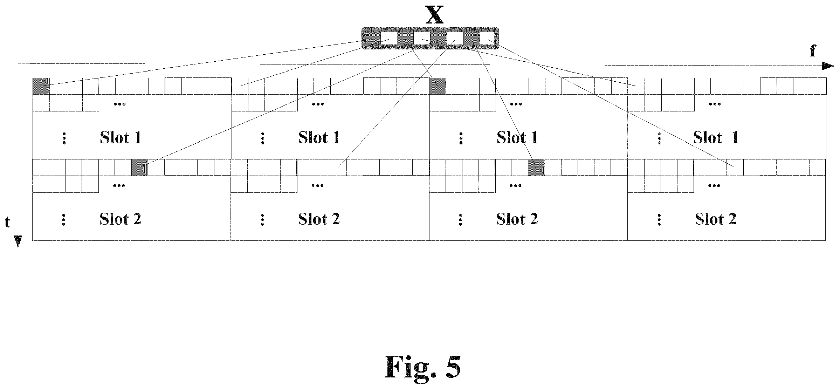

FIG. 5 is a schematic diagram of another example of performing resource mapping of Embodiment 1 of this disclosure, which shall be described by taking eight symbols as an example. As shown in FIG. 5, a first symbol is mapped onto a first RE of a first RB (a first OFDM symbol and a first subcarrier at a timeslot 1), a second symbol is mapped onto a first RE of a second RB (a first OFDM symbol and a first subcarrier at a timeslot 1), a third symbol is mapped onto a first RE of a third RB (a first OFDM symbol and a first subcarrier at a timeslot 1), and a fourth symbol is mapped onto a first RE of a fourth RB (a first OFDM symbol and a first subcarrier at a timeslot 1).

As shown in FIG. 5, a fifth symbol is mapped onto an $(i \times j)$-th RE of a first RB (an $i$-th OFDM symbol and a $j$-th subcarrier at a timeslot 2), a sixth symbol is mapped onto an $(i \times j)$-th RE of a second RB (an $i$-th OFDM symbol and a $j$-th subcarrier at a timeslot 2), a seventh symbol is mapped onto an $(i \times j)$-th RE of a third RB (an $i$-th OFDM symbol and a $j$-th subcarrier at a timeslot 2), and an eighth symbol is mapped onto an $(i \times j)$-th RE of a fourth RB (an $i$-th OFDM symbol and a $j$-th subcarrier at a timeslot 2).

Hence, not only the eight symbols are dispersed onto different resource blocks (or timeslots) so that diversity gains may be increased, but also the first symbol and the fifth symbol are mapped onto REs of non-neighboring time-frequency positions (belonging to different timeslots) of the same RB so that diversity gains may further be increased. Moreover, after the resource mapping method is used, both the second RB and the fourth RB contain only zero symbols, and hence, no demodulation reference signal is needed, so that overhead of reference signal may be lowered.

In FIG. 5, what is different from FIG. 4 in which "the neighboring mapping manner" is adopted is that "the hop mapping manner" is adopted. However, this disclosure is not limited thereto, and other hop manners may also be used. For example, a first symbol is mapped onto a first RE of a first RB (a first OFDM symbol and a first subcarrier), a second symbol is mapped onto an $(i \times j)$-th RE of a second RB (an $i$-th OFDM symbol and a $j$-th subcarrier), a third symbol is mapped onto a first RE of a third RB (a first OFDM symbol and a first subcarrier), and so on. And a particular implementation of "the hop mapping manner" is not limited in this disclosure.

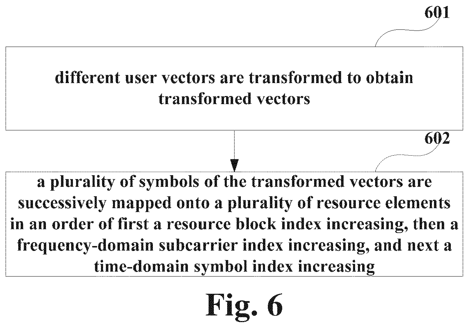

FIG. 6 is another flowchart of the resource mapping method of the embodiment of this disclosure. As shown in FIG. 6, the resource mapping method includes:

Block 601: different user vectors are transformed to obtain transformed vectors; and

Block 602: a plurality of symbols of the transformed vectors are successively mapped onto a plurality of resource elements in an order of first a resource block index increasing, then a frequency-domain subcarrier index increasing, and next a time-domain symbol (such as an OFDM symbol) index increasing.

In an embodiment, in transmitting data symbols by user equipments, possibly multiple user vectors may be transmitted, and the multiple user vectors may be independent of each other. By transforming multiple user vectors, association between symbols of the user vectors may be introduced, thereby further improving performance.

In an embodiment, transforming different user vectors to obtain transformed vectors may include: joining different user vectors to form a joint real-number vector; and multiplying the joint real-number vector by a predetermined matrix to form a transformed real-number vector, and obtaining the transformed vectors according to the transformed real-number vector.

In an embodiment, for example, by multiplying a real-number vector jointly constituted by two symbol vectors by an orthogonal matrix, a higher-dimensional real-number vector may be obtained, which is equivalent to obtaining a high-dimensional complex-number vector. And the newly-obtained high-dimensional vector may be deemed as a high-dimensional user vector.

For example, taking two user vectors as an example, the transformation may be performed by using the formulae below:

$$\mathbf{s}_R = \begin{bmatrix} \mathrm{real}(\mathbf{s}_1) & \mathrm{real}(\mathbf{s}_2) & \mathrm{imag}(\mathbf{s}_1) & \mathrm{imag}(\mathbf{s}_2) \end{bmatrix}^T,$$

$$\mathbf{x}_R = \mathbf{U}\mathbf{s}_R,$$

and

$$\mathbf{x}_R = \begin{bmatrix} \mathrm{real}(\mathbf{x}) & \mathrm{imag}(\mathbf{x}) \end{bmatrix}^T;$$

where, $S_1$ and $S_2$ respectively denote the user vectors, $S_R$ denotes the joint vector, $X_R$ denotes the transformed vector, $U$ denotes the predetermined matrix, *real* denotes a real part, and *image* denotes an imaginary part.

As each user uses a sparse vector, the above transformation may be performed for non-zero elements only, that is, in constituting the vector $S_R$, zero elements in $S_1$ and $S_2$ are removed, thereby obtaining a vector $S_R$ containing non-zero elements only. In that case, a dimension of the vector $S_R$ is lowered, and correspondingly, dimensions of the matrix $U$ and the vector $X_R$ are also lowered. After a vector $X$ is obtained, a transformed vectors having the original dimensions may be obtained again by supplementing zero elements.

Furthermore, the matrix $U$ capable of optimizing performance is not unique; for example, both the following two types of matrix $U$ have good performances. Here, the matrix $U$ is given under the assumption that the non-zero elements are transformed only.

$$\mathbf{U} = \begin{bmatrix} \cos\theta\cos\varphi & 0 & -\cos\theta\sin\varphi & 0 & -\sin\theta\cos\varphi & 0 & \sin\theta\sin\varphi & 0 \\ \cos\theta\sin\varphi & 0 & \cos\theta\cos\varphi & 0 & -\sin\theta\sin\varphi & 0 & -\sin\theta\cos\varphi & 0 \\ \sin\theta\cos\varphi & 0 & -\sin\theta\sin\varphi & 0 & \cos\theta\cos\varphi & 0 & -\cos\theta\sin\varphi & 0 \\ \sin\theta\sin\varphi & 0 & \sin\theta\cos\varphi & 0 & \cos\theta\sin\varphi & 0 & \cos\theta\cos\varphi & 0 \\ 0 & \sin\theta\sin\varphi & 0 & \sin\theta\cos\varphi & 0 & \cos\theta\sin\varphi & 0 & \cos\theta\cos\varphi \\ 0 & \cos\theta\cos\varphi & 0 & -\cos\theta\sin\varphi & 0 & -\sin\theta\cos\varphi & 0 & \sin\theta\sin\varphi \\ 0 & \cos\theta\sin\varphi & 0 & \cos\theta\cos\varphi & 0 & -\sin\theta\sin\varphi & 0 & -\sin\theta\cos\varphi \\ 0 & \sin\theta\cos\varphi & 0 & -\sin\theta\sin\varphi & 0 & \cos\theta\cos\varphi & 0 & -\cos\theta\sin\varphi \end{bmatrix}$$

or,

$$\mathbf{U} = \begin{bmatrix} \cos\theta & 0 & 0 & 0 & \sin\theta & 0 & 0 & 0 \\ -\sin\theta & 0 & 0 & 0 & \cos\theta & 0 & 0 & 0 \\ -\sin\theta & 0 & 0 & 0 & \cos\theta & 0 & 0 & 0 \\ \cos\theta & 0 & 0 & 0 & \sin\theta & 0 & 0 & 0 \\ 0 & 0 & \cos\theta & 0 & 0 & 0 & \sin\theta & 0 \\ 0 & 0 & -\sin\theta & 0 & 0 & 0 & \cos\theta & 0 \\ 0 & 0 & -\sin\theta & 0 & 0 & 0 & \cos\theta & 0 \\ 0 & 0 & \cos\theta & 0 & 0 & 0 & \sin\theta & 0 \end{bmatrix}.$$

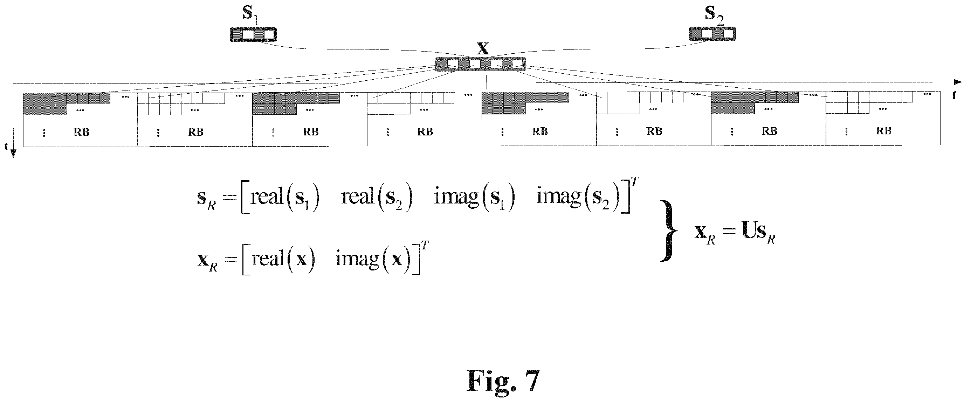

FIG. 7 is a schematic diagram of a further example of performing resource mapping of the embodiment of this disclosure. As shown in FIG. 7, two four-symbol user vectors S1 and S2 may be transformed into an eight-symbol vector X.

For example, as shown in FIG. 7, a first symbol is mapped onto a first RE of a first RB (a first OFDM symbol and a first subcarrier), a second symbol is mapped onto a first RE of a second RB (a first OFDM symbol and a first subcarrier), ..., an eighth symbol is mapped onto a first RE of an eighth RB (a first OFDM symbol and a first subcarrier).

In the embodiments of this disclosure, resource mapping is performed on the transformed vector still according to the mapping manner of physical resource block by physical resource block, so that the advantage of saving the overhead of demodulation reference signals may be reserved, and as the same signal component is dispersed to frequency positions relatively far from each other, a better diversity result may be obtained.

Furthermore, for the eight-symbol vector X, mapping may also be performed in the manner of FIG. 5.

That is to say, extension may be performed on the basis that the vector transformation is performed, and in performing the resource mapping, the high-dimensional user vector obtained after the transformation may be mapped onto resource elements with time domains and frequency domains being all relatively disperse (for example, by using "the hop mapping manner" shown in FIG. 5), which may further achieve and utilize diversity gains.

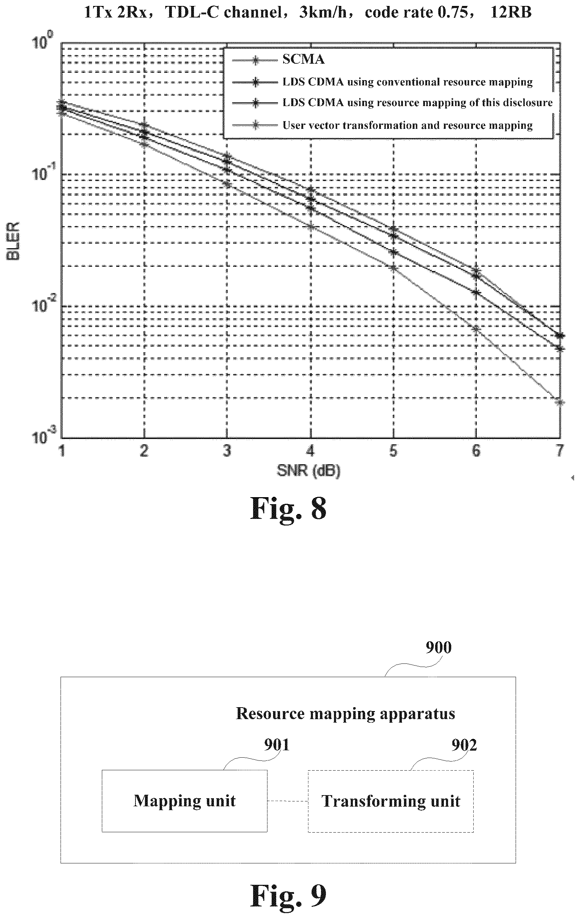

FIG. 8 is a schematic diagram of comparison of the method for mapping resources one resource block by one resource block of the embodiment of this disclosure with another mapping method, in which bit error rate (BER) performance curves of the SCMA using the mapping method shown in FIG. 2, the LDS CDMA using the mapping method shown in FIG. 2, the LDS CDMA using the method for mapping resources one resource block by one resource block of the embodiment of this disclosure and a method for mapping resources one resource block by one resource block after the user vector is transformed, are shown.

As shown in FIG. 8, the performance of the SCMA using the mapping method shown in FIG. 2 is most poor, the performance of the LDS CDMA using the mapping method shown in FIG. 2 is secondarily poor, the performance of the LDS CDMA using the method for mapping resources (one resource block by one resource block) of the embodiment of this disclosure shown in FIG. 3 is relatively good, and the performance of using the method shown in FIG.6 (for mapping resources one resource block by one resource block after the user vector is transformed) is best.

It can be seen from the above embodiment that multiple to-be-mapped symbols are mapped successively one resource block by one resource block onto multiple resource elements; wherein, multiple symbols belonging to the same user vector are dispersedly mapped onto resource elements of different resource blocks. Hence, diversity gains may further be obtained, and overhead of reference signals may be lowered.

Embodiment 2

These embodiments of this disclosure provide a resource mapping apparatus. These embodiments correspond to the resource mapping method of Embodiment 1, with identical contents being not going to be described herein any further.

FIG. 9 is a schematic diagram of the resource mapping apparatus of the embodiment of this disclosure. As shown in FIG. 9, the resource mapping apparatus 900 includes:

a mapping unit 901 configured to map a plurality of to-be-mapped symbols successively one resource block by one resource block onto a plurality of resource elements; wherein, a plurality of symbols belonging to the same user vector are dispersedly mapped onto resource elements of different resource blocks.

In an embodiment, the mapping unit 901 may particularly be configured to: map the plurality of to-be-mapped symbols successively onto the plurality of resource elements in an order of first a resource block index increasing, then a frequency-domain subcarrier index increasing, and next a time-domain symbol index increasing.

In an embodiment, the symbols belonging to the same user vector may be dispersedly mapped onto resource elements of identical or neighboring time-frequency positions of different resource blocks.

In another embodiment, the symbols belonging to the same user vector may be dispersedly mapped onto resource elements of non-neighboring time-frequency positions of different resource blocks.

As shown in FIG. 9, the resource mapping apparatus 900 may further include:

a transforming unit 902 configured to transform different user vectors to obtain transformed vectors; and the mapping unit 901 is further configured to map a plurality of symbols of the transformed vectors successively onto the plurality of resource elements in an order of first a resource block index increasing, then a frequency-domain subcarrier index increasing, and next a time-domain symbol index increasing.

In an embodiment, the transforming unit 902 may particularly be configured to: join different user vectors to form a joint real-number vector; multiply the joint real-number vector by a predetermined matrix to form a transformed real-number vector; and obtain the transformed vectors according to the transformed real-number vector.

For example, the transforming unit 902 may perform the transformation by using the formulae below:

$$\mathbf{s}_R = \begin{bmatrix} \mathrm{real}(\mathbf{s}_1) & \mathrm{real}(\mathbf{s}_2) & \mathrm{imag}(\mathbf{s}_1) & \mathrm{imag}(\mathbf{s}_2) \end{bmatrix}^T,$$

$$\mathbf{x}_R = \mathbf{U}\mathbf{s}_R,$$

and

$$\mathbf{x}_R = \begin{bmatrix} \mathrm{real}(\mathbf{x}) & \mathrm{imag}(\mathbf{x}) \end{bmatrix}^T ;$$

where, $S_1$ and $S_2$ respectively denote the user vectors, $S_R$ denotes the joint real-number vector, $X_R$ denotes the transformed real-number vector, U denotes the predetermined matrix, real denotes a real part, and image denotes an imaginary part.

It can be seen from the above embodiment that multiple to-be-mapped symbols are mapped successively one resource block by one resource block onto multiple resource elements; wherein, multiple symbols belonging to the same user vector are dispersedly mapped onto resource elements of different resource blocks. Hence, diversity gains may further be obtained, and overhead of reference signals may be lowered.

Embodiment 3

These embodiments of this disclosure provide a communication system, with contents identical to those in embodiments 1 and 2 being not going to be described herein any further.

In an embodiment, the communication system may include:

a transmitting device configured with the resource mapping apparatus 900 as described in Embodiment 2; and
a receiving device configured to receive and demodulate information transmitted by the transmitting device.

In an embodiment, multiple transmitting device may map symbols respectively onto multiple resource elements to perform non-orthogonal multiple access. The transmitting device may be a user equipment, such as an MTC UE, and the receiving device may be a base station. However, this disclosure is not limited thereto, and the transmitting device may be a base station, and the receiving device may be a user equipment. And furthermore, the transmitting device and the receiving device may also be other network devices.

Following description shall be given by taking that the transmitting device is a user equipment and the receiving device is a base station as an example.

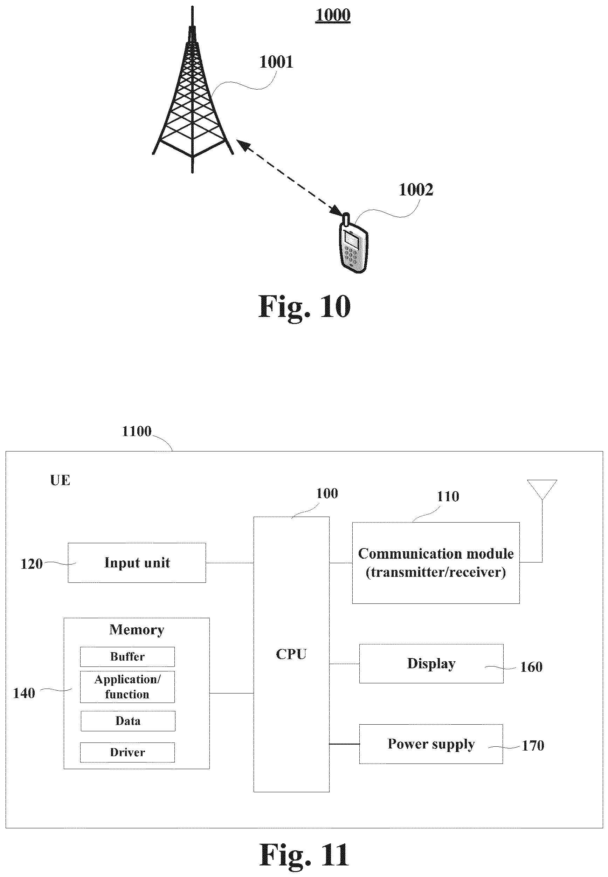

FIG. 10 is a schematic diagram of the communication system of the embodiment of this disclosure. As shown in FIG. 10, the communication system 1000 may include a base station 1001 and a user equipment 1002. The user equipment 1002 is configured with the resource mapping apparatus 900 as described in Embodiment 2.

The embodiment of this disclosure further provides a transmitting device, which may be, for example, a user equipment.

FIG. 11 is a schematic diagram of the user equipment of the embodiment of this disclosure. As shown in FIG. 11, the UE 1100 may include a central processing unit 100 and a memory 140, the memory 140 being coupled to the central processing unit 100. It should be noted that this figure is illustrative only, and other types of structures may also be used, so as to supplement or replace this structure and achieve a telecommunications function or other functions.

In an embodiment, functions of the resource mapping apparatus 900 may be integrated into the central processing unit 100. The central processing unit 100 may be configured to carry out the resource mapping method described in Embodiment 1.

For example, the central processing unit 100 may be configured to perform following control: mapping a plurality of to-be-mapped symbols successively one resource block by one resource block onto a plurality of resource elements; wherein, a plurality of symbols belonging to the same user vector are dispersedly mapped onto resource elements of different resource blocks.

In another embodiment, the resource mapping apparatus 900 and the central processing unit 100 may be configured separately. For example, the resource mapping apparatus 900 may be configured as a chip connected to the central processing unit 100, with its functions being carried out under control of the central processing unit 100.

As shown in FIG. 11, the UE 1100 may further include a communication module 110, an input unit 120, a display 160 and a power supply 170. Functions of the above components are similar to those in the relevant art, and shall not be described herein any further. It should be noted that the UE 1100 does not necessarily include all the parts shown in FIG. 11, and the above components are not necessary; and furthermore, the UE 1100 may include parts not shown in FIG. 11, and the relevant art may be referred to.

The embodiment of this disclosure further provides transmitting device, which may be, for example, a base station.

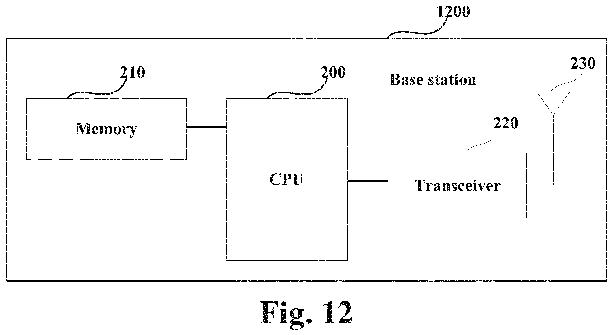

FIG. 12 is a schematic diagram of a structure of the base station in the embodiment of this disclosure. As shown in FIG. 12, the base station 1200 may include a central processing unit (CPU) 200 and a memory 210, the memory 210 being coupled to the central processing unit 200. The memory 210 may store various data, and furthermore, it may store a program for information processing, and execute the program under control of the central processing unit 200.

The resource mapping apparatus 900 may carry out the resource mapping method described in Embodiment 1, and the central processing unit 200 may be configured to carry out the functions of the resource mapping apparatus 900.

For example, the central processing unit 200 may be configured to perform following control: mapping a plurality of to-be-mapped symbols successively one resource block by one resource block onto a plurality of resource elements; wherein, a plurality of symbols belonging to the same user vector are dispersedly mapped onto resource elements of different resource blocks.

Furthermore, as shown in FIG. 12, the base station 1200 may include a transceiver 220, and an antenna 230, etc. Functions of the above components are similar to those in the relevant art, and shall not be described herein any further. It should be noted that the base station 1200 does not necessarily include all the parts shown in FIG. 12, and furthermore, the base station 1200 may include parts not shown in FIG. 12, and the relevant art may be referred to.

The embodiment of this disclosure further provides transmitting device, which may be, for example, a network device, and FIG. 12 may be referred to for a structure of the network device.

An embodiment of the present disclosure provides a computer readable program code, which, when executed in a transmitting device, will cause the transmitting device to carry out the resource mapping method described in Embodiment 1.

An embodiment of the present disclosure provides a computer readable medium, storing a computer readable program code, which will cause a transmitting device to carry out the resource mapping method described in Embodiment 1.

The above apparatuses of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The method/apparatus described with reference to the embodiments of this disclosure may be directly embodied as hardware, software modules executed by a processor, or a combination thereof. For example, one or more functional block diagrams and/or one or more combinations of the functional block diagrams shown in FIG. 9 may either correspond to software modules of procedures of a computer program, or correspond to hardware modules. Such software modules may respectively correspond to the steps shown in FIG. 3. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the figures may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

**Claims**

1. A resource mapping method, comprising:
   mapping a plurality of to-be-mapped symbols successively one resource block by one resource block onto a plurality of resource elements; wherein, a plurality of symbols belonging to the same user vector are dispersedly mapped onto resource elements of different resource blocks.

2. The resource mapping method according to claim 1, wherein mapping a plurality of to-be-mapped symbols successively one resource block by one resource block onto a plurality of resource elements comprises:
mapping the plurality of to-be-mapped symbols successively onto the plurality of resource elements in an order of first a resource block index increasing, then a frequency-domain subcarrier index increasing, and next a time-domain symbol index increasing.

3. The resource mapping method according to claim 2, wherein the symbols belonging to the same user vector are dispersedly mapped onto resource elements of identical or neighboring time-frequency positions of different resource blocks.

4. The resource mapping method according to claim 2, wherein the symbols belonging to the same user vector are dispersedly mapped onto resource elements of non-neighboring time-frequency positions of different resource blocks.

5. The resource mapping method according to claim 1, wherein the resource mapping method further comprises:

   transforming different user vectors to obtain transformed vectors; and
   mapping a plurality of symbols of the transformed vectors successively onto the plurality of resource elements in an order of first a resource block index increasing, then a frequency-domain subcarrier index increasing, and next a time-domain symbol index increasing.

6. The resource mapping method according to claim 5, wherein the transforming different user vectors to obtain transformed vectors comprises:

   joining different user vectors to form a joint real-number vector;
   multiplying the joint real-number vector by a predetermined matrix to form a transformed real-number vector; and
   obtaining the transformed vectors according to the transformed real-number vector.

7. The resource mapping method according to claim 6, wherein the transformation is performed by using formulae below:

$$\mathbf{s}_R = \begin{bmatrix} \mathrm{real}(\mathbf{s}_1) & \mathrm{real}(\mathbf{s}_2) & \mathrm{imag}(\mathbf{s}_1) & \mathrm{imag}(\mathbf{s}_2) \end{bmatrix}^T,$$

$$\mathbf{x}_R = \mathbf{U}\mathbf{s}_R,$$

and

$$\mathbf{x}_R = \begin{bmatrix} \mathrm{real}(\mathbf{x}) & \mathrm{imag}(\mathbf{x}) \end{bmatrix}^T;$$

where, $S_1$ and $S_2$ respectively denote the user vectors, $S_R$ denotes the joint real-number vector, $X_R$ denotes the transformed real-number vector, U denotes the predetermined matrix, real denotes a real part, and image denotes an imaginary part.

8. A resource mapping apparatus, comprising:
   a mapping unit configured to map a plurality of to-be-mapped symbols successively one resource block by one resource block onto a plurality of resource elements; wherein, a plurality of symbols belonging to the same user vector are dispersedly mapped onto resource elements of different resource blocks.

9. The resource mapping apparatus according to claim 8, wherein the mapping unit is configured to: map the plurality of to-be-mapped symbols successively onto the plurality of resource elements in an order of first a resource block index increasing, then a frequency-domain subcarrier index increasing, and next a time-domain symbol index increasing.

10. The resource mapping apparatus according to claim 9, wherein the symbols belonging to the same user vector are dispersedly mapped onto resource elements of identical or neighboring time-frequency positions of different resource blocks.

**11.** The resource mapping apparatus according to claim 9, wherein the symbols belonging to the same user vector are dispersedly mapped onto resource elements of non-neighboring time-frequency positions of different resource blocks.

**12.** The resource mapping apparatus according to claim 8, wherein the resource mapping apparatus further comprises:

a transforming unit configured to transform different user vectors to obtain transformed vectors;
and the mapping unit is further configured to map a plurality of symbols of the transformed vectors successively onto the plurality of resource elements in an order of first a resource block index increasing, then a frequency-domain subcarrier index increasing, and next a time-domain symbol index increasing.

**13.** The resource mapping apparatus according to claim 12, wherein the transforming unit is configured to: join different user vectors to form a joint real-number vector; multiply the joint real-number vector by a predetermined matrix to form a transformed real-number vector; and obtain the transformed vectors according to the transformed real-number vector.

**14.** The resource mapping apparatus according to claim 13, wherein the transforming unit is configured to perform the transformation by using formulae below:

$$\mathbf{s}_R = \begin{bmatrix} \mathrm{real}(\mathbf{s}_1) & \mathrm{real}(\mathbf{s}_2) & \mathrm{imag}(\mathbf{s}_1) & \mathrm{imag}(\mathbf{s}_2) \end{bmatrix}^T,$$

$$\mathbf{x}_R = \mathbf{U}\mathbf{s}_R,$$

and

$$\mathbf{x}_R = \begin{bmatrix} \mathrm{real}(\mathbf{x}) & \mathrm{imag}(\mathbf{x}) \end{bmatrix}^T;$$

where, $S_1$ and $S_2$ respectively denote the user vectors, $S_R$ denotes the joint real-number vector, $X_R$ denotes the transformed real-number vector, U denotes the predetermined matrix, real denotes a real part, and image denotes an imaginary part.

**15.** A communication system, comprising:

a transmitting device configured with the resource mapping apparatus as claimed in claim 8; and
a receiving device configured to receive and demodulate information transmitted by the transmitting device.

UE 1    UE 2    UE 3    UE 4    UE 5    UE 6

## Fig. 1

## Fig. 2

301

a plurality of to-be-mapped symbols are mapped
successively one RB by one RB onto a plurality of
resource elements; wherein, a plurality of symbols
belonging to the same user vector are dispersedly
mapped onto resource elements of different RBs

## Fig. 3

EP 3 457 650 A1

Fig. 4

**Fig. 5**

601

different user vectors are transformed to obtain
transformed vectors

602

a plurality of symbols of the transformed vectors are
successively mapped onto a plurality of resource elements
in an order of first a resource block index increasing, then a
frequency-domain subcarrier index increasing, and next a
time-domain symbol index increasing

# Fig. 6

$$\mathbf{s}_R = \begin{bmatrix} \text{real}(\mathbf{s}_1) & \text{real}(\mathbf{s}_2) & \text{imag}(\mathbf{s}_1) & \text{imag}(\mathbf{s}_2) \end{bmatrix}^T$$

$$\mathbf{x}_R = \begin{bmatrix} \text{real}(\mathbf{x}) & \text{imag}(\mathbf{x}) \end{bmatrix}^T$$

$$\mathbf{x}_R = \mathbf{U}\mathbf{s}_R$$

Fig. 7

1Tx 2Rx，TDL-C channel，3km/h，code rate 0.75， 12RB

Fig. 8

Fig. 9

**Fig. 10**

**Fig. 11**

Fig. 12

# INTERNATIONAL SEARCH REPORT

| | International application No. |
|---|---|
| | PCT/CN2016/082031 |

## A. CLASSIFICATION OF SUBJECT MATTER

H04L 27/26 (2006.01) i

According to International Patent Classification (IPC) or to both national classification and IPC

## B. FIELDS SEARCHED

Minimum documentation searched (classification system followed by classification symbols)

H04L; H04Q; H04W

Documentation searched other than minimum documentation to the extent that such documents are included in the fields searched

Electronic data base consulted during the international search (name of data base and, where practicable, search terms used)

CNPAT, CNKI, WPI, EPODOC: RB, PRB, symbol?, index, in order, map, diversity gain, scatter, same, user, frequency, time

## C. DOCUMENTS CONSIDERED TO BE RELEVANT

| Category* | Citation of document, with indication, where appropriate, of the relevant passages | Relevant to claim No. |
|---|---|---|
| X | CN 101146317 A (BEIJING SAMSUNG TELECOM TECHNOLOGY CO., LTD. et al.) 19 March 2008 (19.03.2008) description, page 5, line 7 to page 6, line 16, and figure 1 | 1-15 |
| X | CN 101080081 A (HUAWEI TECHNOLOGIES CO., LTD.) 28 November 2007 (28.11.2007) description, page 2, lines 5-13, and figure 3 | 1-15 |
| X | CN 101039164 A (HUAWEI TECHNOLOGIES CO., LTD.) 19 September 2007 (19.09.2007) description, page 3, line 2 to page 4, line 5 | 1-15 |
| A | CN 101102140 A (ZTE CORPORATION) 09 January 2008 (09.01.2008) the whole document | 1-15 |
| A | EP 2811799 A1 (NTT DOCOMO, INC.) 10 December 2014 (10.12.2014) the whole document | 1-15 |

☐ Further documents are listed in the continuation of Box C.　　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 December 2016 | 30 December 2016 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Jinling<br><br>Telephone No. (86-10) 62413420 |

Form PCT/ISA /210 (second sheet) (July 2009)

## INTERNATIONAL SEARCH REPORT
Information on patent family members

International application No.

PCT/CN2016/082031

| Patent Documents referred in the Report | Publication Date | Patent Family | Publication Date |
|---|---|---|---|
| CN 101146317 A | 19 March 2008 | None | |
| CN 101080081 A | 28 November 2007 | None | |
| CN 101039164 A | 19 September 2007 | None | |
| CN 101102140 A | 09 January 2008 | None | |
| EP 2811799 A1 | 10 December 2014 | US 2015016370 A1 | 15 January 2015 |
| | | WO 2013115260 A1 | 08 August 2013 |
| | | CN 104094659 A | 08 October 2014 |
| | | JP 2013157822 A | 15 August 2013 |

Form PCT/ISA/210 (patent family annex) (July 2009)